(19) **Europäisches Patentamt / European Patent Office / Office européen des brevets**

(11) **EP 1 785 999 B1**

(12) **EUROPEAN PATENT SPECIFICATION**

(45) Date of publication and mention
of the grant of the patent:
**04.03.2009 Bulletin 2009/10**

(51) Int Cl.:
***G21B 1/00*** *(2006.01)*

(21) Application number: **06123707.9**

(22) Date of filing: **08.11.2006**

(54) **Spherical fusion reactor and method for maintaining or initiating a fusion**

Kugelförmiger Fusionsreaktor und Verfahren zur Aufrecherhaltung oder Initiierung einer Fusion

Réacteur à fusion sphérique et procédé de maintien ou d'initiation d'une fusion

(84) Designated Contracting States:
**AT BE BG CH CY CZ DE DK EE ES FI FR GB GR HU IE IS IT LI LT LU LV MC NL PL PT RO SE SI SK TR**

(30) Priority: **10.11.2005 CH 18052005**

(43) Date of publication of application:
**16.05.2007 Bulletin 2007/20**

(73) Proprietors:
• **Tar, Domokos**
 **8712 Stäfa (CH)**
• **Müller, K. Alexander**
 **8908 Hedingen (CH)**

(72) Inventors:
• **Tar, Domokos**
 **8712 Stäfa (CH)**
• **Müller, K. Alexander**
 **8908 Hedingen (CH)**

(56) References cited:
WO-A-90/13136    US-A- 4 023 065
US-A- 4 430 600    US-A- 4 654 561

## Description

The present application claims the priority of the Swiss patent application CH01805/05 which was filed on 10 November 2005.

The present invention concerns fusion reactors and in particular tokamak fusion reactors. It aims at realizing a substantial increase of the density and temperature of the plasma and thus an improvement of a reactor's efficiency.

## Background of the invention

D1: WO 90/13136 A (AUCHTERLONIE, R. [US])
The invention concerns a magnetohydrodynamic confined torus with an internal magnetic field aligned with the axis of the torus and applying an external magnetic field aligned antiparallel with the internal magnetic field. It seems like two coaxially bent cylinders in a toroid form, wherein the plasma is between the two cylinders. By increasing the intensity of the external magnetic field the vortex should collapse due to the so called magnetic field reconnection (hypothetycal), which causes the plasma to be concentrated and heated.
An other form of the invention includes a magnetic mirror (pinch coil) in the poloidal plane which initiates the compression. From an initially voluminous vortex cylinder is a compressed vortex ring created.
D2: US-A-4 654 561 (SHELTON, J. D [US])
The invention concerns a magnetic containment vessel in spherical form. The secondary coil of a transformer creates a primary magnetic field in the vertical axis of the vessel. The upper and lower poles of the coil have a hemispherical form and so the magnetic field lines have a symmetrical ellipsoidal shape in space in respect with the vertical axis in the vessel. Secondary electromagnets in lateral position control the relative shape of the primary magnetic field. There are gas jets and ionization means provided which rotate the ionized plasma bunch (called ball) in the centre of the vessel. The primary magnetic field is adapted to encompass and sustain a plasma ball.
D3: US-A-4 430 600 (SHEFFIELD, et al.[US])
The invention concerns the so called Torsatron device which is a modified Stellerator. It has a low aspect ratio with high beta and capable of operating in the steady state. In the Torsatron a screw symmetry of the combined toroidal and poloidal field coils are used, forming closed loops on the surface of the toroid. In addition the helical windings serve also to generate the basic toroidal field. In a modul construction the coil system is easy to disassemble and so the complexity of the coil system is greatly reduced.
In the Torsatron the plasma is confined topologically in a vortex ring structure and has a hollow space in the centre of the minor cross section.

## The principle of the reactor of fusion:

Deuterium (D) und Tritium (T) nuclei are fused according to the equation:

$$_1^2\mathrm{D} + {}_1^3\mathrm{T} \rightarrow {}_2^4\mathrm{He} + {}_0^1\mathrm{n} + 17.6\,\mathrm{MeV}$$

Through this reaction, energy will be released. For fusion to occur the following, so- called Lawson's formula must be fulfilled:

$$n \cdot T \cdot \tau > 6{,}0 \cdot 10^{21}\ \mathrm{m^{-3} keV\, s^{-1}}\,,$$

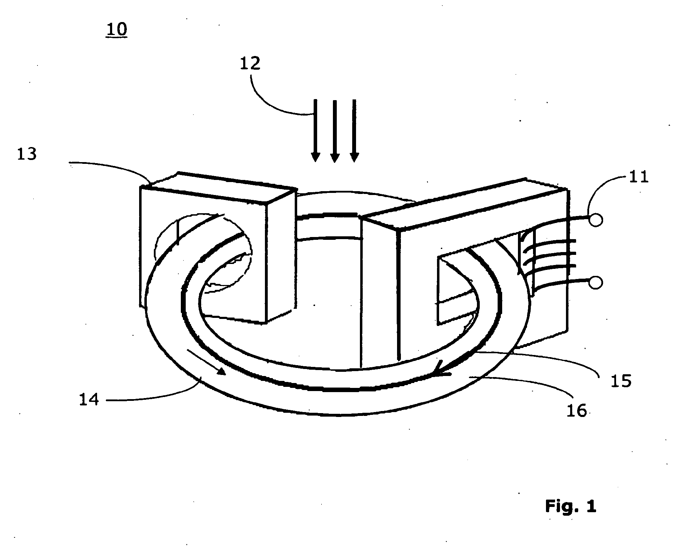

where n = the ion density, T = the temperature in K, and $\tau$ the self-confinement time necessary for the occurrence of fusion. The fusion temperature must be about $10^8$ K. The problem of today's fusion research is that the plasma is very unstable, and therefore the criteria necessary for fusion can only be achieved for a very short time. The instability is mainly due to the unfavorable ring form of the container (Fig. 1). The reason for this may be that the surface of a torus is very unstable by nature: the ring has two predetermined axes of symmetry, with one axis being a ring which does not provide sufficient degrees of freedom. At high temperatures, the so-called toroidal magnetic field holds the plasma together in a closed ring (torus) (known as magnetic pinch-effect). The plasma of the tokamak is held together by three magnetic fields, which are positioned very precisely in relation to each other. The advantage of the tokamak lies in the fact that the container surface is continuous and symmetrical; it encloses only one volume. For this reason the tokamak today is the best candidate for a fusion reactor.

In the following, for reasons of simplicity, a torus with circular cross section will be discussed, but the same considerations are valid for any cross section, for example the D-shaped cross section, used for most of tokamaks today. In spite of considerable efforts, such as different low-temperature-cooled superconductive magnets, high-frequency fields etc., the instabilities and the ensuing energy loss through heat conduction, radiation and particle diffusion could not be eliminated. Therefore neither the high temperature needed for the fusion nor a sufficiently long confinement time could be achieved. Ideal would be the realization of fusion in spherical form, but this is very difficult to achieve. Only the sun achieved it, due to very large gravitational forces.

## Summary of the invention

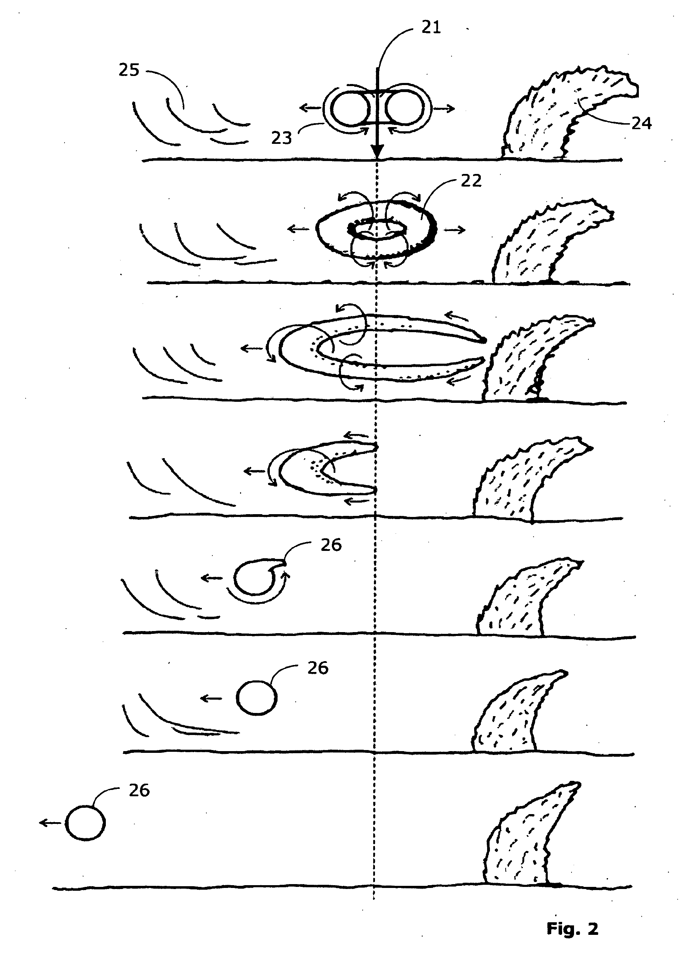

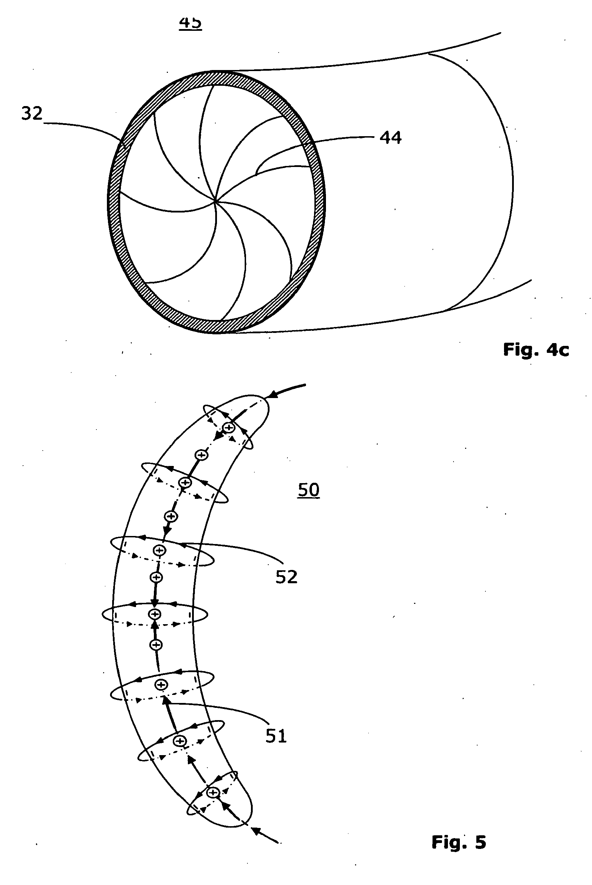

The idea of this invention was provided by the accidental observation of the formation of the lightning ball in nature during very stormy weather (Refs. 1 - 4). For the first time, a very reliable theory was established, that corresponds with the observation (Ref. 4). The lightning ball forms out of a hydrodynamical vortex ring, but only if certain conditions are fulfilled. This is why lightning balls are an extremely rare phenomenon. The lightning ball is also a plasma, but one that can occur under normal atmospheric conditions. The observation and the new theory of the lightning ball and ball lightning are described in Ref 4, the knowledge of which is here assumed. For better understanding of the phenomena, a figure of the above is shown here as Fig. 2. This figure describes the hypothetical shrinking of the vortex ring 22 having a poloidal rotation 23 into a lightning ball 26 after being disturbed by a bush 24 for instance. The intermediate state resembles a crescent form (cf. Fig. 5).

The invisible vortex ring 22 caused by the lightning 21 impact is a sum of the shock and sound waves 25, that spreads out radially, loses its energy continuously, and disappears after a short time. In rare cases it can break up asymmetrically on one side, and the crescent-like remainder 50 can shrink rapidly into a sphere (Fig. 2 and 5). The plasma temperature increases automatically, and the sphere lights up strongly. This is the very rarely observed lightning ball 26.

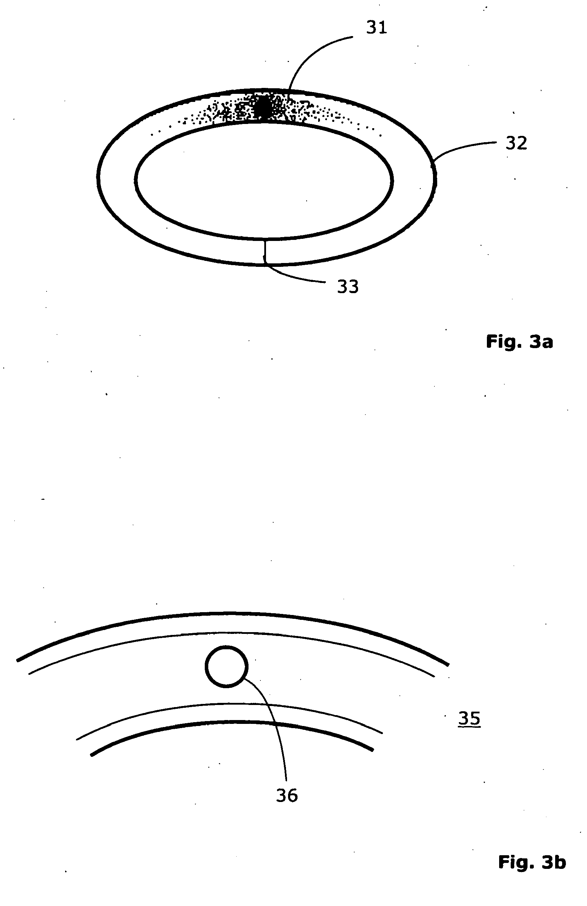

The idea of the invention is based on the recognition that an analogy must exist between the way a lightning ball develops, and the plasma ring of the tokamak (cf. Figs 1, 2 and 3a). This observation is used to solve the above mentioned problems and difficulties of the tokamak fusion experiments, or, to at least increase their degree of efficiency.

In the stellarator there is no toroidal current.

In the following the hydrodynamical vortex ring of the lightning (cf. Fig. 2) and the plasma ring of the tokamak (Fig. 1) are compared. The rotational movement of the particles in these two rings is probably not the same, but it is considered to be similar. If the observation made is taken as example, it could be advantageous to impart to the particles in the plasma a spin in a plane perpendicular to the rotational ring axis. In this way cylindrical forces can be created. Only after this should the ring be cut or disturbed in accordance with the present invention in order to obtain the sphere. The particles in the stellarator move on helicoidal tracks around the axis of the torus. The collective long-range forces of the particles are likely to be present in both cases, i.e. with or without perpendicular poloidal rotational forces, because they are a characteristic feature of each plasma.

Therefore, once the tokamak plasma torus is cut or otherwise disturbed, it shrinks together into a sphere, exactly like a lightning ball. The shrinking of the plasma into a cluster is an inherent natural property of each plasma: upon an external disturbance the particles try to remain together in a cluster. According to the Lawson's formula, if the density increases, the temperature will rise or the self-confinement time will increase, so that the fusion occurs more easily. Through this process the density and the temperature of the plasma increase by about two orders of magnitude (the volume of the sphere is about 100 times smaller than that of the torus (see estimation below)). On the other hand, it means that so much heating of the plasma would not be necessary before the shrinkage or after the shrinkage, so the time necessary for the fusion (self-confinement time) could be shorter. Thanks to the above mentioned collective feature of the plasma it can be stated that the shrinking into a sphere and thus the desired fusion can be achieved. The similarity of both phenomena cannot be purely accidental, especially because the sphere has the greatest volume at the smallest surface. The sphere has three rotational axes, all of which are perpendicular to each other (and all have the crossing point in the centre of the sphere) and thus they have a larger degree of freedom than a ring. In comparison, the torus ring has only two axes, one of which is a circle and the other is perpendicular to the ring axis.

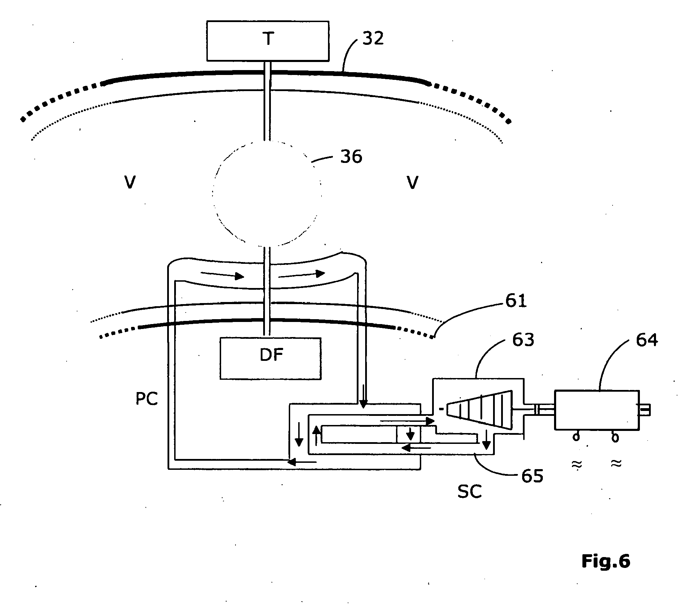

Using the inventive design described herein, the temperature necessary for fusion can be reached more easily and/or the self-confinement time can be increased. This is achieved using the design and measures described in the following sections. With the inventive approach processes of the nature are emulated, since the sun and stars, in which the fusion occurs, are also spherical. It is not excluded that the sun could have been created from its creation sheet through the same mechanism and that gravitation only became effective later on. If - once fusion has started- new fuel is fed into the plasma, a continuous fusion can be ensured. According to the current state of the art, a deuterium and tritium mixture will be fed (Fig.6) into the reactor.

## The collective property of the plasma

The plasma possesses a very interesting inherent property that differentiates it from normal gases. Although the plasma is macroscopically neutral, that is it is not charged, microscopically it possesses the so-called collective effect. That means that all or at least a considerable part of the particles simultaneously act on other particles and thus long-range electromagnetic forces act between the individual charged particles. These collective forces ensure that the plasma holds together in a cluster, for example in a sphere. This effect is believed to contribute to the formation of the lightning ball. This process can be explained as shown in Fig.5. Immediately after the cutting of the vortex ring, an intermediate state of a crescent-like shape develops for a very short time. This crescent will shrink continuously and ultimately a sphere is formed.

The shrinking can be caused by three different forces (cf. Fig. 5):

- The surface tension forces of the double electrical layer pull the crescent together at the two ends.
- The inertial rotational force forces the positive central bow into a straight line.
- At the end, the long-range collective forces pull the crescent into a sphere.

The different types of instabilities continuously disturb and destroy the cluster. If some neutral particles also exist in the plasma, their range of action is limited to short interatomic distances. In strong ionized plasmas, the so-called hot plasmas, the long-range Coulomb reciprocal interactions predominate. In the case of weakly ionized plasmas, the charge-neutral interactions predominate. There are dense as well as dilute plasmas at high and at low temperatures, but all exhibit the collective property.

**Estimation of temperature increase due to the collective shrinking of the plasma**

With the assumption that the temperature increase is proportional to the shrinking of the plasma, one can estimate the temperature increase as follows: Volume of torus = $\pi \cdot r^2 \cdot 2\pi R$ and volume of sphere= $4\pi r^3 : 3$, where r = is the sphere radius, R = the ring radius, $V_R$ the ring volume, and $V_S$ the volumes of sphere. Thus the compression = $k = V_R : V_S = 3/2 \cdot \pi \cdot R/r = 4{,}71 \cdot R/r$. As an example if r = 0.15 m and R = 2.5 m, the compression has a value of 80. This value strongly depends on the circumstances, but it can be said that the plasma temperature can increase by about two orders of magnitude. This factor can be much greater if the fusion is concentrated in a very small sphere.

**The Stellarator**

In contrast to the tokamak, in the stellarator it is possible to cancel the toroidal currents by means of helicoidal coils with opposite currents creating poloidal magnetic fields.

Brief description of the drawings

For a more complete description of the present invention and for further objects and advantages thereof, reference is made to the following description, taken in conjunction with the accompanying drawings, which show:

Fig. 1      The tokamak principle;
Fig. 2      Formation of the lightning ball from a hydrodynamical vortex ring;
Fig. 3a     The cut plasma torus in an intermediate state, according to the present invention;
Fig. 3b     The plasma sphere obtained, according to the present invention;
Fig. 4a     A slide screen, according to the present invention;
Fig. 4b     An umbrella screen, according to the present invention;
Fig. 4c:    An iris screen, according to the present invention;
Fig.5:      The shrinkage of the crescent shaped residue of the plasma into a sphere (as presented in symposium of Ref. 4);
Fig.6:      A schematic diagram of a sphere fusion reactor, according to the present invention.

Detailed description:

In the following, means are described that help realize the cutting and shrinking of a plasma, e.g. a plasma ring, into a sphere. The time of intervention is crucial. According to the present invention the duration of the cutting should be very short, preferably less than about 0.1 seconds. The state of plasma should not be disturbed by the cutting, i.e. the vacuum should not be changed at all. A perpendicular rotation of the plasma around the ring axis (poloidal rotation) is advantageous since due to this rotation it is more likely that an ideal and complete shrinking can be achieved. It is known that in a tokamak with a large security factor q, the plasma confinement near the board (wall of container) increases. On the other hand, it was proved that working with a low q has benefits such as an increase of the temperature, an important decrease of the toroidal velocities, and an extension of the average self-confinement time.

Therefore, in a preferred embodiment of the invention the toroidal velocities of the plasma particles should be substantially decreased at low q and at the same time the poloidal component of velocities should be substantially increased or at least maintained. In this case, a local disturbance or interruption (herein also called cutting) of the plasma is sufficient in order to cause the plasma to retract into a sphere.

Mechanical means are the most effective in order to disturb or interrupt the plasma. Well suited are obstacles such as screens or shutters, where plates of high-temperature-resistant and non-magnetic materials are being shot into the plasma very rapidly. Materials such as austenitic steel, tungsten, beryllium, carbon- fiber reinforced carbon, ceramic or similar materials are used. Their purpose is to locally disturb or cut the plasma ring in space without disturbing the actual temperature too much. Depending on the actual circumstances and setup of the reactor, it is not necessary to cut or disturb the entire cross section but only a part thereof.

The following numbered list (which is a non-exhaustive list) enumerates different means to cut or disturb the plasma ring in order to facilitate the shrinkage into a sphere:

**1. The slide screen 40 (falling screen)**

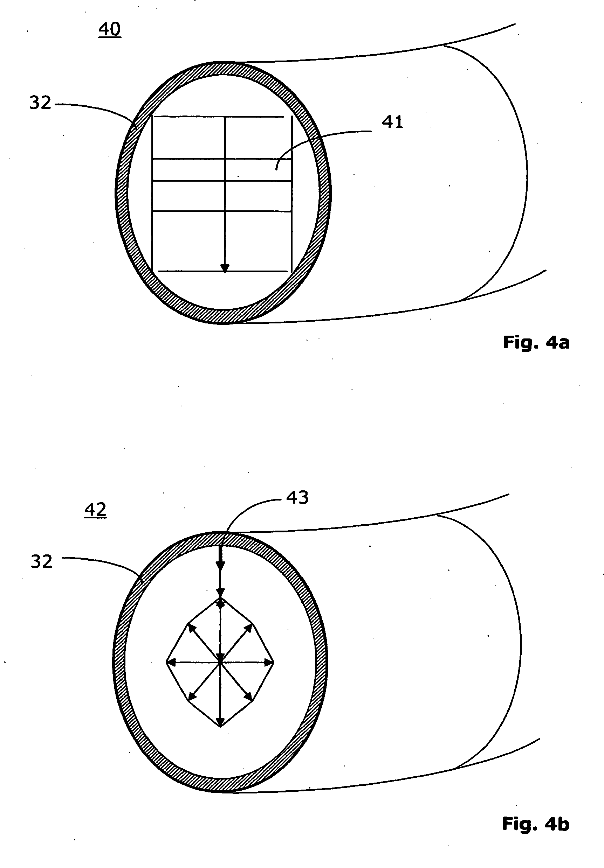

Numerous thin lamellas of a slide screen 41 are caused to fall from the top of the torus ring 32 to the bottom of the torus ring 32 (cf. Fig. 4a) and block the central (or an other) part of the torus ring 32. The principle is comparable to a sliding shutter. The slide screen 41 allows the plasma to be partially or completely cut.

## 2. The umbrella screen 42

A short telescope rod 43 is mounted on the top of the torus ring 32. This telescope rod 43 is caused to project abruptly into the center of the torus ring 32, and the umbrella screen 42 spreads out a screen-shaped portion (Fig. 4b). The umbrella screen 42 allows the plasma to be partially or completely cut.

## 3. The iris spring screen 45

This method is used by photographic cameras. The lamellae 44 of an iris spring screen 45 preferably are located on the inner surface wall of the torus ring 32 (Fig. 4c). In the activated state the lamellae 44 are caused to spring concentrically into the center of the torus ring 32. The iris spring screen 45 allows the plasma to be partially or completely cut.

Depending on the implementation and layout of the respective fusion reactor, a fusion process is initiated in the plasma during or after the shrinkage of the plasma into a plasma sphere. In other words, the fusion process may be triggered by the inventive means since only after the shrinkage into the much smaller spherical volume the conditions for a sustainable fusion process are given.

The above enumeration is not exhaustive and the embodiments can be combined or modified. Other methods and means can be used, but all with the same goal: to cut or disturb the plasma, e.g. a torus ring 32, and thus enable a shrinking of the plasma into a sphere to facilitate and realize the appearance of fusion.

A schematic layout of a possible implementation of an inventive fusion reactor is shown on Fig. 8 where the plasma sphere 36 is confined in the vacuum V within the torus ring 32. The means for feeding additional fuel Tritium T and Deutrium fuel DF for instance, to maintain the plasma and/ or to initiate the fusion, are also shown on Fig.6. A Primary Circuit (PC) is employed in exchanging heat with a medium in a Secondary Circuit (SC) that in turn will be used in a steam generator 65 to propel a turbine 63 which drives a current generator 64.

REFERENCES:

1. D. Tar, Presentation at the Hungarian-Austrian Physicists Meeting, 24 August 2004, in Szombathely, Hungary. Abstracts, ed. A. Horváth, p. 11, Eötvös Fizikai Tàrs. Budapest 2004.

2. D. Tar, A gömbvillàm keletkezésének, lefolyásának és eltünésének megfigyelése (Observation of formation, life and disappearance of ball lightning. A new phenomenological description of the phenomenon (in Hungarian)), Fizikai Szemle, Budapest, Oktober 2004, pp.334-338, ed. by Eötvös Fizikai Tàrsulat.

3. D.Tar: Observation of the ball lightning. - Speech at University of Zürich, Seminar in Exp.Physics, 10 Nov. 2005.

4. D.Tar: Observation of Lightning Ball.- A New Phenomenological Description of the Phenomenon (Part I); Lightning Ball and Ball Lightning: Two different Phenomena-A New Phenomenological Description of the Phenomenon (Part II), 9th International Symposium on Ball Lightning (ISBL-06), 16-19 August 2006, Eindhoven, The Netherlands, pp.222-232. Eds. G. C. Dijkhuis,D.K.Callebaut and M. Lu

## Claims

1. A fusion reactor (10) which, if being operated, comprises a plasma (31) confined as a plasma torus (32), and further comprises:

   - means arranged to substantially decrease at low security factor (q) toroidal velocities of particles of said plasma (31), and
   - means arranged to substantially increase at the same time poloidal velocities of particles of said plasma (31), and
   - means for locally cutting or disturbing said plasma (31) **characterised in that** said means are mechanical means.

2. A fusion reactor according to claim 1, further **characterised in that** said mechanical means are a slide screen (40), and/or an umbrella screen (42), and/or an iris spring screen (45).

3. A method for realizing an increase of the density and the temperature of a plasma (31), originally having the shape of a plasma torus (32) in a fusion reactor (10), comprising the following steps:

   - at the same time substantially decreasing toroidal velocities of particles at low security factor (q) of said plasma (31) and substantially increasing poloidal velocities of particles of said plasma (31),
   - causing with means a local disturbance or cutting of said plasma (31), **characterised in that** said means are mechanical means.

## Patentansprüche

1. Ein Fusionsreaktor (10) der, beinhaltet in seiner Arbeitsweise ein plasma (31) in einem Torus eingeschlossen (32) und der weiter einschliesst:

   - Mittel ausgebildet zu einer wesentlichen Verminderung der toroidalen Geschwindigkeiten der Partikel im genannten Plasma (31) bei niedrigem Sicherheitsfaktor (q), und

- Mittel ausgebildet zu wesentlicher Erhöhung, zur gleichen Zeit, der poloidalen Geschwindigkeiten der Partikel des genannten Plasmas (31), und
- Mittel für den örtlichen Schnitt oder die Störung des genannten Plasmas (31) **dadurch gekennzeichnet, dass** die genannten Mittel mechanischer natur sind.

2. Ein Fusionsreaktor nach dem Anspruch 1, der **dadurch gekennzeichnet ist, dass** die mechanischen Mittel, Schiebeblende (40) und/ oder Regenschirmblende (42) und/oder Iris-Sprungblende ausgebildet sind.

3. Eine Methode für die Realisierung der Zunahme der Dichte und der Temperatur des Plasmas (31), die ursprünglich eine Form von Torus in einem Fusionsreaktor (10) gehabt hat, die folgenden Schritte enthaltend:

- zur gleichen Zeit der wesentlichen Verminderung der toroidalen Geschwindigkeiten der Partikel bei niedrigem Sicherheitsfaktor (q) des gesamten Plasmas (31) und eine wesentliche Erhöhung der poloidalen Geschwindigkeiten der Partikel des Plasmas (31),
- erzeugt mit Mittel eine lokale Störung oder Schnitt des genannten Plasmas (31), **dadurch gekennzeichnet, dass** die genannten Mittel mechanische sind.

**Revendications**

1. Un réacteur de fusion (10), en operation, qui comprend un plasma (31) confiné en torus de plasma (32) et entre autres possède :

- moyens arrangés pour obtenir une réduction substantielle à un bas facteur de securité (q) des vitesses toroidales des particules de plasma (31), et
- moyens arrangés pour augmentation substantielle simultanée des vitesses poloidales des particules du dit plasma (31), et
- moyens pour la perturbation ou la coupure locale du dit plasma (31) characterisées par des moyens méchaniques.

2. Un réacteur de fusion selon la revendication 1, est characterisé par le fait que les moyens mécaniques correspondent à un glisseur-diaphragme (40), et/ou une diaphragme-parapluie (42), et/ou un diaphragme en iris(45).

3. Une méthode pour la réalisation d'une augmentation de la densité et de la température d'un plasma (31), originalement ayant une forme de torus (32) dans un réacteur de fusion (10), comprenent les measures suivantes:

- réduction substantielle des vitesses toroidales des particules au bas facteur de securité (q) du dit plasma (31) et augmentation substantielle simultanée des vitesses poloidales des particules du plasma (31),
- causant avec les moyens une perturbation ou une coupure locale du dit plasma (31) utilisant des moyens méchaniques.

10

12

13

11

14

15

16

Fig. 1

**Fig. 2**

31

32

33

**Fig. 3a**

35

36

**Fig. 3b**

**Fig. 4a**

**Fig. 4b**

45

32

44

**Fig. 4c**

50

52

51

**Fig. 5**

Fig.6

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CH 0180505
- WO 9013136 A, AUCHTERLONIE, R.
- US 4654561 A, SHELTON, J. D
- US 4430600 A, SHEFFIELD

**Non-patent literature cited in the description**

- Presentation at the Hungarian-Austrian Physicists Meeting. **D. TAR.** Szombathely. 24 August 2004, 11
- A gömbvillàm keletkezésének, lefolyásának és eltünésének megfigyelése (Observation of formation, life and disappearance of ball lightning. **D. TAR.** A new phenomenological description of the phenomenon. October 2004, 334-338
- **D.TAR.** Observation of the ball lightning. *Seminar in Exp.Physics,* 10 November 2005
- Observation of Lightning Ball.- A New Phenomenological Description of the Phenomenon (Part I); Lightning Ball and Ball Lightning: Two different Phenomena-A New Phenomenological Description of the Phenomenon (Part II. **D.TAR.** 9th International Symposium on Ball Lightning (ISBL-06). 16 August 2006, 222-232